Europäisches Patentamt

European Patent Office

Office européen des brevets

(19)

(11) EP 0 601 404 B1

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int Cl.⁶: **C08B 11/10**, C08B 11/193, D06P 1/50

(21) Anmeldenummer: **93118986.4**

(22) Anmeldetag: **25.11.1993**

(54) **Hochsubstituierte Carboxymethyl-sulfoethylcellulose-ether (CMSEC), Verfahren zu deren Herstellung und Verwendung im Textildruck**

Highly substituted carboxymethyl sulfoethyl cellulose ether (CMSEC), process for producing the same and application for textile printing

Ether carboxyméthyle-sulfoéthyle hautement substitué de la cellulose (CMSEC), procédé pour sa préparation et application à l'impression du textile

(84) Benannte Vertragsstaaten:
**AT BE DE FR IT NL SE**

(30) Priorität: **08.12.1992 DE 4241289**

(43) Veröffentlichungstag der Anmeldung:
**15.06.1994 Patentblatt 1994/24**

(73) Patentinhaber: **WOLFF WALSRODE AKTIENGESELLSCHAFT D-29699 Walsrode (DE)**

(72) Erfinder:
  • **Kiesewetter, René, Dr. D-29614 Soltau-Ahlften (DE)**
  • **Kniewske, Reinhard, Dr. D-29683 Fallingbostel (DE)**
  • **Reinhardt, Eugen D-29664 Walsrode (DE)**
  • **Szablikowski, Klaus, Dr. D-29664 Walsrode (DE)**

(74) Vertreter: **Braun, Rolf, Dr. et al Bayer AG Konzernbereich RP Patente und Lizenzen 51368 Leverkusen (DE)**

(56) Entgegenhaltungen:
EP-A- 0 319 865        EP-A- 0 319 868
EP-A- 0 601 403        DE-A- 3 208 430
US-A- 2 811 519

• **DATABASE WPI Week 7412, Derwent Publications Ltd., London, GB; AN 74-21656V & JP-A-48 027 985 (SANYO KOKISAKU PULP CO.) 13. April 1973**
• **CHEMICAL ABSTRACTS, vol. 110, no. 2, 9. Januar 1989, Columbus, Ohio, US; abstract no. 9963p, & JP-A-63 182 301 (DAIICHI KOGYO SEIYAKU CO.) 27. Juli 1988**
• **CHEMICAL ABSTRACTS, vol. 94, no. 18, 4. Mai 1981, Columbus, Ohio, US; abstract no. 141132x, & SU-A-794 098 (INSTITUTE FOR THE PROCESSING OF CHEMICAL FIBERS) 7. Januar 1981**
• **DATABASE WPI Week 7412, Derwent Publications Ltd., London, GB; AN 74-21656V & JP-A-48 027 985**
• **CHEMICAL ABSTRACTS, vol. 110, no. 2, 9. Januar 1989, Columbus, Ohio, US; abstract no. 9963p, & JP-A-63 182 301**
• **CHEMICAL ABSTRACTS, vol. 94, no. 18, 4. Mai 1981, Columbus, Ohio, US; abstract no. 141132x, & SU-A-794 098**

**Beschreibung**

Die Erfindung betrifft bestimmte hochsubstituierte CMSEC und ein vereinfachtes und wirtschaftliches Verfahren zur Herstellung solcher hochsubstituierter Carboxymethyl-Sulfoethylcelluloseether und deren Verwendung als Verdickungsmittel im Textildruck.

Unter dem Begriff hochsubstituiert werden all jene Produkte verstanden, deren mittlerer Gesamtsubstitutionsgrad wenigstens 1,6 beträgt, wobei der Gesamtsubstitutionsgrad jedoch unter 2,2 liegen soll. Der Substitutionsgrad durch Sulfoethylgruppen liegt bei <0,4.

Cellulosederivate, insbesondere Carboxymethylcellulosen (CMC), werden in den verschiedensten Bereichen als Verdickungs- und Dispergiermittel, Trägermaterialien und Hydrokolloide bei der Herstellung von Pharmaka, Nahrungsmitteln und Kosmetika eingesetzt (siehe hierzu z.B. K. Balser in: Ullmanns Encyclopädie der Technischen Chemie, 4. Auflage, Band 9, Verlag Chemie, Weinheim, 1975, Seite 208; K. Balser, K. Szablikowski: Papier [Darmstadt] 35 [1981] 578; W. Burchardt: Polysaccharide, Springer-Verlag, Berlin-Heidelberg, 1985, 126 ff, 171 ff).

In der Regel besitzt die CMC hierbei Substitutionsgrade von 0,4 bis 1,2 (siehe z.B. G. I. Stelzer, E. D. Klug in R. L. Davidson, Handbook of Water Soluble Gums and Resins. Kapitel 4, Seite 3, McGraw Hill, New York, 1980). Für spezielle Anwendungen werden jedoch extrem hochsubstituierte Produkte mit besonders guter Lösungsqualität gefordert.

Eine solche Anwendung stellt z.B. der Einsatz von CMC als Verdickungsmittel für Farbdruckpasten beim Druck von textilem Gewebe mit z.B. Reaktivfarbstoffen dar.

Nach DE 32 08 430 C 2 sind beim Bedrucken von Textilgewebe mit z.B. Reaktivfarbstoffen nur solche Carboxymethylcellulosen einsetzbar, die Substitutionsgrade von mindestens 2,2, vorzugsweise jedoch von mindestens 2,5 besitzen. Damit sollen schlechte Auswaschbarkeiten und Griffverhärtungen der bedruckten Stellen vermieden werden.

Solche hochsubstituierten Produkte erfordern jedoch eine mehrfache Wiederholung des Alkalisierungs- und Veretherungsschrittes, was komplexe und kostenintensive Herstellungsverfahren notwendig macht, wobei, über mehrere Stufen betrachtet, sehr schlechte Substitutionsausbeuten resultieren. (DE-OS 33 03 153; M. Rinaudo, G. Hudry-Clergeon, J. Chim. Phys. 64, 1746 [1967]; J. W. Green, R. L. Whistler, Methods in Carbohydrate Chemistry, Vol. 3, Cellulose, Seite 324, Academic Press, New York, London, 1963.)

Aus wirtschaftlichen Erwägungen werden häufig Semi-dry-Verfahren favorisiert. Entsprechende Umsetzungen führen jedoch - auch bei extrem hochveretherten Produkten-zu immer noch schlechten Lösungsqualitäten (siehe hierzu z.B. R. R. McLaughlin, J. H. E. Herbst, Can. J. Res., 28 B, 731 ff, 737 ff [1950]).

Ziel der vorliegenden Erfindung war es, ein wirtschaftliches und betrieblich umsetzbares Verfahren zur Herstellung hochsubstituierter Sulfoalkylcellulosederivate mit ausgezeichneter Lösungsqualität aufzuzeigen. Insbesondere sollten Produkte zur Verfügung gestellt werden, die bereits bei Substitutionsgraden von <2,2 als Verdickungsmittel im Textildruck einsetzbar sind. Die Nachteile der mit Substitutionsgraden von <2,2 zum Einsatz gelangten Carboxymethylcellulosen, insbesondere die Griffverhärtung des Substrates (Textilgewebes), sollten dabei vermieden werden.

Überraschenderweise wurde gefunden, daß Sulfoalkylcellulosederivate, insbesondere Carboxymethylsulfoethylcelluloseether (CMSEC) mit mittleren Gesamtsubstitutionsgraden von >1,6 und <2,2, und Sulfoethylsubstitutionsgraden von <0,4, die Nachteile des Standes der Technik überwinden. Das einfache und wirtschaftliche Herstellverfahren wird durch folgende Merkmale charakterisiert:

a) Umsetzung von sulfoethyl- und/oder carboxymethylgruppenübertragenden Reagenzien nach einem Slurryverfahren mit Alkalicellulose bis zu einem Gesamtsubstitutionsgrad von ca. 0,7 bis ca. 0,95.

Die Veretherungsreagenzien werden zusammen, bevorzugt aber nacheinander, zur Reaktion gebracht werden. Insbesondere erfolgt zunächst die Umsetzung mit sulfoethylgruppenübertragenden Reagenzien, wobei hierbei die Zugabe an Reagenz insbesondere vor der Zugabe des Alkali in das Slurrymedium vorgenommen wird.

b) Gegebenenfalls wird die Menge des Slurrymediums reduziert und die im ersten Reaktionsschritt hergestellte Carboxymethyl-, Sulfoethyl- oder Carboxymethyl-Sulfoethylcellulose ohne zwischengeschaltete Reinigungsstufe in einem zweiten Reaktionsschritt ohne vorherige Mahlung durch Zugabe weiterer Veretherungsreagenzien bis zu Gesamtsubstitutionsgraden von DS >1,6 aber <2,2 weiterverethert. Der Substitutionsgrad durch Sulfoethylgruppen liegt bei <0,4.

c) Separierung, gegebenenfalls vollständige oder teilweise Abtrennung von Reaktionsnebenprodukten durch Reinigung mit vorzugsweise wäßrig-organischen Lösungsmitteln. Anschließend Trocknung, Mahlung und Konfektionierung des so erhaltenen Sulfoethylcellulosederivats in üblicher und bekannter Weise.

Die nach dem obengenannten Verfahren hergestellte Carboxymethylsulfoethylcellulose ist als Verdickungsmittel für Textildruckpasten einsetzbar und verhält sich gegenüber dem in der Druckpaste vorliegenden Reaktivfarbstoff weitgehend inert, und führt somit zu keiner Griffverhärtung des bedruckten Substrates.

Ionische Cellulosemischether, die einen Sulfoalkyl-, insbesondere Sulfoethylsubstituenten tragen, insbesondere Carboxymethylsulfoethylcellulosen, werden in der Patentliteratur beschrieben.

Entsprechend US-A 2 132 181 wird ein Verfahren zur Herstellung von Polysaccharid-Verbindungen beansprucht. Die ionischen Cellulosemischether werden in mehreren Stufen hergestellt, wobei die Alkalisierung in einem ersten Reaktionsschritt erfolgt (Maischalkalisierung). Die sich daran anschließende Veretherung mit Natriumvinylsulfonat und Methylchlorid, Ethylchlorid, Ethylenoxid oder Chloressigsäure wird in einer bzw. zwei Stufen vorgenommen. Die Umsetzung mit Natriumvinylsulfonat erfolgt vorzugsweise im Kneter. Bei diesem Verfahren wird mit extremen Überschüssen an Lauge gearbeitet, was einerseits zu erheblichen Nebenreaktionen führt, andererseits die Herstellung dieser Produkte äußerst unwirtschaftlich macht. Darüber hinaus sind - wie bereits oben erwähnt - Umsetzungen im Laborkneter erfahrungsgemäß mit überaus schlechten Lösungsqualitäten, d.h. hohen Faser- und Gelkörperanteilen verbunden.

Bei den in DE-OS 31 47 434, DE-A 33 06 621, DE-OS 33 16 124 und DE-OS 34 17 952 beschriebenen wasserlöslichen Cellulosemischethern werden u.a. ionische Cellulosemischether mit Methyl-, Carboxyalkyl- sowie Sulfonoalkylgruppen beschrieben. Die in ihrer Viskosität, ihrem Substitutionsgrad, ihrer Ausbeute und ihrer Lösungsqualität nicht näher bezeichneten Produkte werden entweder in Dimethylether bzw. Dimethoxyethan allein oder zusammen mit Alkanolen, Alkandiolen und/oder Alkoxyalkanolen hergestellt.

Die Herstellung von Carboxymethylsulfoethylcelluloseether (CMSEC) mit Gesamtsubstitutionsgraden von <2,8 (DS Sulfoethyl = 0,15 bis 0,3; DS Carboxymethyl = 0,25 bis 2,5) wird in US-A 2 811 519 beansprucht. Die Veretherung erfolgt bevorzugt durch gleichzeitige Zugabe von carboxy- und sulfoethylgruppenübertragenden Reagenzien. Ziel dabei ist es, Produkte mit sehr guter Salz- und Säurestabilität in einem kostengünstigen Verfahren bereitzustellen. Die CMSECs zeigen jedoch, verfahrensbedingt, extrem niedrige Viskositäten, zeichnen sich aber durch sehr gute Lösungs-, Salz- und Säurestabilitäten aus. Die beispielhaft erwähnten niedrigsubstituierten und damit im Textildruck nicht einsetzbaren Produkte weisen Gesamtsubstitutionsgrade von deutlich unter 1,0 auf, was mit der literaturbekannten Tatsache einhergeht, wonach bei Carboxymethylierungen bei einstufig durchgeführten Veretherungsprozessen in der Regel nur Substitutionsgrade bis ca. 1 ,0 erhältlich sind (siehe hierzu z.B. K. Engelskirchen in: Houben-Weyls "Makromolekulare Stoffe", Band E 20/III, Seite 2074, Herausgeber A. Barth und J. Falbe, Georg-Thieme-Verlag, Stuttgart/New York, 1987).

In SU 794 098 ist die Verwendung von CMSEC als Viskositätsbildner für Druckpasten zum Bedrucken von Textilmaterial aus Acetat- oder Viskosefasern, natürlichen oder synthetischen Polyamidfasern beschrieben. Die dort erfindungsgemäß beanspruchte CMSEC besitzt Substitutionsgrade durch Sulfoethylgruppen von 0,1 bis 0,25 und Substitutionsgrade durch Carboxymethylgruppen von 0,4 bis 0,55 und zeigt damit ein ähnliches Substitutionsmuster wie die in US-PS 2 811 519 beispielhaft erwähnten CMSECs. Der Einsatz einer derart niedrigsubstituierten CMSEC im Textildruck hat die Steigerung der Farbintensität sowie die Erhöhung der Viskosität und die Verbesserung der Homogenität der Druckmischung zum Ziel. Eine Verbesserung des Griffverhaltens des bedruckten Materials ist jedoch nur bei solchen Produkten möglich, bei denen eine weitgehende Blockierung der primären OH-Gruppen in der $C_6$-Position der Cellulose vorliegt, was bei den erwähnten CMSECs aufgrund ihres niedrigen Gesamtsubstitutionsgrades nicht der Fall sein kann (siehe auch DE 32 08 430 C 2 und Vergleichsbeispiel weiter unten). Darüber hinaus weisen die beschriebenen CMSECs sehr schlechte Lösungsqualitäten auf. Die Transmission einer 0,5 %igen wäßrigen Lösung liegt lediglich bei 89,5 %, was auf einen sehr hohen Faseranteil der Lösungen hindeutet. Derartige Produkte führen im Textildruck sehr schnell zu Verstopfungen der Schablonen, Gaze oder Rotationsschablonen. Fehlerhafte Drucke sind dabei zwangsläufig die Folge. Die genannte CMSEC führt damit in keiner Weise zu einer Verbesserung des Standes der Technik.

Nach DE-OS 37 42 106 sind CMSECs mit sehr guten Lösungsqualitäten herstellbar. Der mittlere Gesamtsubstitutionsgrad genügt der Formel:

$$0,5 \leq \text{DS Sulfoethyl} + \text{DS Carboxymethyl} \leq 1,6,$$

wobei der Substitutionsgrad durch Sulfoethylgruppen bei 0,1 bis 1,0 und derjenige durch Carboxymethylgruppen bei 0,3 bis 1,2 liegt. Die Produkte sind als Verdicker oder Wasserrückhalter in den Bereichen Erdöl, Baustoffe sowie als Verdicker oder Stabilisatoren von Wasch- und Reinigungsmitteln und Kosmetika einsetzbar. Des weiteren ist die CMSEC als Dispergier- und Suspendiermittel sowie als Hilfsmittel und Viskositätsbildner in wäßrigen Systemen, wie z.B. als Stabilisator, Dispergier- und Suspendiermittel bei Emulsions- und Suspensionspolymerisationen geeignet.

Das erfindungsgemäß beanspruchte einfache und kostengünstige Herstellungsverfahren für eine CMSEC führt zu Produkten, die bei gegenüber dem Stand der Technik deutlich niedrigere Gesamtsubstitutionsgrade, im Textildruck gegenüber den herkömmlich eingesetzten Produkten (Alginat, CMC) verbesserte drucktechnische Ergebnisse aufweisen.

Die nach dem erfindungsgemäßen Verfahren hergestellte, nach dem weiter unten beschriebenen Meßverfahren charakterisierte CMSEC zeichnet sich durch ausgezeichnete Lösungsqualitäten aus und kann als Dispergier-, Binde- oder Verdickungsmittel bzw. als Rheologieverbesserer in der Textilindustrie, insbesondere im Textildruck, eingesetzt werden. Die CMSEC ist sowohl als gereinigtes, teilgereinigtes wie auch ungereinigtes, d.h. technisches Produkt einsetzbar. Sie ist gelkörper- und faserfrei in Wasser löslich und besitzt Viskositäten der gereinigten Substanz von 10 bis 50 000 mPa.s (gemessen an einer 2 gew.-%igen wäßrigen Lösung bei einem Schergefälle von $D = 2,5s^{-1}$ bei $T = 20°C$ [Rotationsviskosimeter]).

Um fehlerhafte Drucke, die durch Verstopfung der Schablonen. Gaze oder Rotationsschablonen entstehen könnten, zu vermeiden, wird das im Textildruck eingesetzte Cellulosederivat vor der anwendungstechnischen Ausprüfung auf seine Transmission bzw. seinen wasserlöslichen Anteil untersucht. Die Transmissionswerte der in den Beispielen erwähnten CMSEC bzw. CMC liegen bei >96 % (Hitachi-Spektralphotometer Modell 101, Hitachi Ltd., Tokio/Japan); Glasküvette mit 10 mm optischer Weglänge ($\lambda = 550$ nm; 2 gew.-%ige Lösung in dest. Wasser). Der wasserlösliche Anteil liegt bei >99,9%.

Die erfindungsgemäß hergestellten Carboxymethylsulfoethylcellulosen werden als Druckpasten-Grundlagen im Textildruck eingesetzt. Sie werden dabei vorzugsweise allein, können aber auch im Gemisch mit anderen im Textildruck üblichen natürlichen oder halbsynthetischen Druckpasten-Grundlagen, wie z.B. Natriumalginat, Stärke, modifizierten Stärken, Guar, Johannisbrotkernmehl, Gummiarabicum, Kristallgummi, Traganth-Gummi, Tamarinde und/oder Celluloseethern, insbesondere Carboxymethylcelluloseethern bekannter Gütequalität oder als Mischung mit vollsynthetischen Verdickungsmitteln, wie z.B. Polymerisatverdickern eingesetzt werden, wobei die Menge der erfindungsgemäß beanspruchten CMSEC im Gemisch nicht unter 10 % liegen sollte, da sonst der erfindungsgemäße Vorteil (Salzstabilität, Druckqualität) nicht zum Tragen kommt.

Als Textilmaterialien können synthetische Fasern, Naturfasern, Mischgewebe oder Celluloseregenerat verwendet werden.

Als Farbstoffe werden z.B. Oxidations-, Schwefel-, Entwicklungs-, Woll-, Chromierungs-, Direkt-, Säure-, Dispersions-, Naphthol-, Küpen-, Metallkomplexfarbstoffe, Pigmente oder Handelsprodukte aus einer Mischung einer Kupplungskomponente von Entwicklungsfarbstoffen und einer Diazoaminoverbindung, insbesondere jedoch Reaktivfarbstoffe verwendet.

Die Bestimmung des Carboxymethylsubstitutionsgrades erfolgt nach ASTM-D 1439-83 a Methode B. Die Ermittlung des Substitutionsgrades durch Sulfoethylgruppen erfolgt durch Titration mit Bariumperchlorat gegen Thorin nach Ehrenberger/Gorbach (Ehrenberger/Gorbach: Methoden der organischen Elementar- und Spurenanalyse, Verlag Chemie, Weinheim, 1973, Seite 223). Der Aufschluß hierfür wird nach Schöninger vorgenommen (Heraeus-Druckschrift EW-F 1.6.1. [Methode 1]).

**Beispiele**

**Beispiel 1**

137 Teile eines feingemahlenen, gebleichten, veredelten Linterzellstoffes (Trockengehalt: 94,8 %) werden in einem thermostatisierbaren Reaktor mit geeignetem Rührer unter Stickstoffatmosphäre in 2 193 Teilen Isopropanol, 136,5 Teilen einer 30,5 %igen wäßrigen Lösung von Natriumvinylsulfonat und 108 Teilen Wasser dispergiert und 15 min lang gerührt. Danach werden 89,6 Teile Natriumhydroxid-Plätzchen zugegeben und 80 min bei 25 bis 30°C alkalisiert. In 30 min wird auf 75°C erwärmt und die Reaktionstemperatur von 75°C 150 min lang gehalten. 133 Teile einer 79,6 %igen wäßrigen Lösung von Monochloressigsäuren werden in der Hitze zugetropft. Nach weiteren 150 min bei 75°C wird auf 25 bis 30°C abgekühlt und 76,8 Teile Natriumhydroxid-Plätzchen zugegeben und 30 min bei 25 bis 30°C alkalisiert. 114 Teile einer 79,6 %igen wäßrigen Monochloressigsäure werden sodann bei 25 bis 30°C zugegeben. In 30 min wird auf 75°C erwärmt und bei dieser Temperatur 150 min lang verethert. Das Produkt wird separiert, mit 70 %igem Methanol von Reaktionsnebenprodukten befreit, getrocknet und gemahlen (Sieblinie: 100 % ≤ 0,8 mm). Die so erhaltene CMSEC weist einen Gesamtsubstitutionsgrad von 1,82 auf. Der Substitutionsgrad durch Sulfoethylgruppen beträgt 0,26, derjenige durch Carboxymethylgruppen beträgt 1,56. Die Viskosität des gereinigten Produktes liegt bei 7 500 mPa.s (2 gew.-%ige wäßrige Lösung).

**Beispiel 2** (Vergleichsbeispiel 1)

127 Teile eines feingemahlenen, gebleichten, veredelten Linterzellstoffes (Trockengehalt: 95,2 %) werden in einem thermostatisierbaren Reaktor mit geeignetem Rührer unter Stickstoffatmosphäre in 2 193 Teilen Isopropanol und 210 Teilen Wasser dispergiert. Nach Zugabe von 88 Teilen Natriumhydroxid-Plätzchen wird 80 min bei 25 bis 30°C alkalisiert. 130 Teile einer 80 %igen wäßrigen Lösung von Monochloressigsäure werden hinzugegeben. In 30 min wird auf 70°C erwärmt und 120 min lang bei dieser Temperatur verethert. In der Hitze werden sodann nochmals 88 Teile Natriumhydroxid-Plätzchen und nachfolgend kontinuierlich über einen Zeitraum von 20 min 130 Teile Monochloressigsäure (80 %ig) zugegeben. Nach weiteren 120 min bei 70°C wird auf 25 bis 30°C abgekühlt.

Das Produkt wird separiert, mit 70 %igem Methanol gereinigt, an der Luft getrocknet und gemahlen (Sieblinie: 100 % $\leq$ 0,8 mm). Die CMC weist einen Substitutionsgrad von 1,73 auf. Die Viskosität des gereinigten Produktes liegt bei 19 000 mPa.s.

**Beispiel 3** (Vergleichsbeispiel 2 [SU 794 098])

134 Teile eines feingemahlenen, gebleichten, veredelten Holzzellstoffes (Trockengehalt: 95,2%) werden in einem thermostatisierbaren Reaktor mit geeignetem Rührer unter Stickstoffatmosphäre in 2 193 Teilen einer 30,5 %igen wäßrigen Lösung von Natriumvinylsulfonat dispergiert und 15 min lang gerührt. Danach werden 78,6 Teile Natriumhydroxid-Plätzchen zugegeben und 80 min lang bei 25 bis 30°C alkalisiert. In 30 min wird auf 75°C erwärmt und die Reaktionstemperatur von 75°C 120 min lang gehalten. 56 Teile einer 79,6 %igen wäßrigen Lösung von Monochloressigsäure werden sodann in der Hitze zugetropft. Nach weiteren 120 min bei 75°C wird mit 61,4 Teilen Essigsäure neutralisiert und anschließend auf 25 bis 30°C abgekühlt. Das Produkt wird separiert, mit 70 %igem Methanol gereinigt, getrocknet und anschließend gemahlen (Sieblinie: 100 % $\leq$ 0,8 mm) Die CMSEC weist einen Gesamtsubstitutionsgrad von 0,61 auf. Der Substitutionsgrad durch Sulfoethylgruppen beträgt 0,18, derjenige durch Carboxymethylgruppen beträgt 0,43. Die Viskosität einer 2 gew.-%igen Lösung liegt bei 13 500 mPa.s.

Der Transmisionswert der CMSEC (siehe SU 794 098) beträgt 95,8 %, der wasserlösliche Anteil wurde mit 99,2 % bestimmt.

Das Produkt weist einen sehr hohen Faser- und Gelanteil auf und läßt sich daher nicht als Verdickungsmittel für Druckfarbpasten im Textildruck einsetzen, da Verstopfungen von Schablonen, Gazen bzw. Rotationsschablonen die Folge sind.

Um die Auflösbarkeit des Verdickungsmittels beim Bedrucken des Textilmaterials zu verbessern, empfiehlt es sich, die Produkte vor ihrem Einsatz zu mahlen und auf eine Sieblinie von 100 % $\leq$2,0, insbesondere $\leq$1,0, speziell $\leq$ 0,5 mm, einzustellen.

Das vorzunehmende Zerkleinerungsverfahren wird als Trocken- oder als Naßvermahlung durchgeführt. Als Mühlentypen können Walzen-, Kugel-, Schlag- und Schleuder-, Strahl- oder Schwingmühlen o.a. verwendet werden.

In den nachfolgend aufgeführten Beispielen ist die Wirkung einer erfindungsgemäß eingesetzten Carboxymethylsulfoethylcellulose als Verdickungsmittel im Textildruck, einem handelsüblichen Natriumalginat (Lamitex M 5, Firma Protza/Norwegen) einer im einstufigen Verfahren hergestellten Carboxymethylcellulose (CMC) gegenübergestellt. Verglichen wurden jeweils isoviskose Lösungen mit einer Viskosität der wäßrigen Lösung von ca. 30 000 mPa.s (Brookfield RVF, Spindel 4, 20 Upm).

Die Zusammensetzung der mit Alginat, CMSEC bzw. CMC hergestellten Stammverdickungen ist in Tabelle 1 aufgeführt. Die Druckpasten erhält man durch Abmischung definierter Mengen der jeweiligen Stammverdickung (90 Teile) mit definierten Teilen des Farbstoffes (10 Teile) und dest. Wasser. Als Farbstoff wird ein handelsüblicher Reaktivfarbstoff (Cibacron Türkis PG3® [40%]) eingesetzt.

**Tabelle 1:**  Zusammensetzung der Stammverdickungen

| Verdickungsbestandteile | Stammverdickungen [1] | | | |
|---|---|---|---|---|
| | A | B (Erfindung) | C | D |
| Lamitex M 5 [2] | 550 | - | - | 275 |
| CMSEC | - | 500 | - | - |
| CMC | - | - | 700 | 350 |
| Lyoprint AP® [3] | 3 | 3 | 3 | 3 |
| Lyoprint RG ® [4] | 10 | 10 | 10 | 10 |
| Harnstoff | 100 | 100 | 100 | 100 |
| $Na_2CO_3$-Lösung (1:4) | 75 | 75 | 75 | 75 |
| Permutit-Wasser | 262 | 312 | 112 | 187 |
| Gesamtmenge | 1 000 g | | | |

[1]  Angaben in Gewichtsteilen

[2]  Lamitex M 5 enthält 5 g/kg Natriumhexametaphosphat (Calgon T) und 5 g/kg Formalin (37 %ig)

[3]  Entschäumer; Fa. BASF/Ludwigshafen

[4]  Oxidationsmittel; Fa. BASF/Ludwigshafen

Mit den Fertigdruckpasten werden Druckversuche mit Cotton-Schussatin (mercerisiert, gebleicht) als Substrat vorgenommen. Das Textilgut wird ca. 10 min bei 102 bis 105°C getrocknet (Sattdampf-Fixierung [Mathis-Trockner]) und durch Trockenhitze (Heißluft) fixiert (1 min bei 200°C, Mathis-Trockner). Der Auswaschprozeß erfolgt in 3 Stufen:

a) gründliches, kaltes Spülen,

b) Behandlung in der Nähe der Kochtemperatur (10 min),

c) kaltes Spülen.

Für die Beurteilung von Stärke, Penetration, Nuance, Griff und Egalität wird eine 64-T-Schablone (Rechtecke) und eine Rakel mit einem Durchmesser von 8 mm eingesetzt (Magnetstufe 3, Geschwindigkeitsstufe 3) (Zimmer-Flachfilmdruck). Für die Beurteilung der Standschärfe wird eine 68-T-Testschablone und eine Rakel mit einem Durchmesser von 8 mm verwendet (Magnetstufe 3, Geschwindigkeitsstufe 3). Die Ergebnisse der Druckvorgänge gehen aus Tabelle 2 hervor.

Tabelle 2:

| Druckausfall/Vergleich mit Lamitex M 5 (Nr. 1), Sattdampf-Fixierung | | | | | | | |
|---|---|---|---|---|---|---|---|
| Druck bzw. Druckpaste | Stammverdickung | Stärke [1] | Nuance[1] | Penetration | Egalität | Griff | Standschärfe |
| 1 | A | 100 %[2] | [2] | [2] | [2] | [2] | [2] |
| 2 (Erfindung) | B | 105 % | praktisch gleich | etwas-deutlich mehr | praktisch gleich | etwas besser | etwas-deutlich besser |
| 3 | C | praktisch gleich | praktisch gleich | deutlich mehr | praktisch gleich | etwas-deutlich schlechter | deutlich-erheblich besser |
| 4 | D | praktisch gleich | praktisch gleich | Spur-etwas mehr | praktisch gleich | etwas schlechter | etwas-deutlich besser |

[1] = farbmetrische Messung

[2] = Vergleich

Die in den Tabellen verwendeten Fachausdrücke sind dem Cellulose- bzw. Textildruckfachmann bekannt und bedürfen keiner weiteren Erklärung. Verwiesen sei in diesem Zusammenhang auf die Kapitel "Textildruck" und "Textilfärberei" in Ullmanns Encyclopädie der Technischen Chemie, Band 22, Seite 565 ff und Seite 635 ff (Verlag Chemie, Weinheim, 1982).

Aus der nachfolgend aufgeführten Wertetabelle ist die Überlegenheit des im Textildruck eingesetzten, erfindungsgemäß beanspruchten Sulfoethylcellulosederivates (insbesondere CMSEC) klar erkennbar. Neben der literaturbekannten Elektrolyt- und pH-Stabilität (siehe z.B. US-A 2 811 519, EP 0 319 865 A2 und J6 3182-301A) weist das erfindungsgemäß beanspruchte Cellulosederivat die in Tabelle 3 aufgeführten Vorteile auf.

Tabelle 3:

| Exemplarischer Vergleich zwischen herkömmlichen, im Textildruck eingesetzten Verdickungsmitteln und dem erfindungsgemäß beanspruchten Celluloseether | | | |
| --- | --- | --- | --- |
| Austestung hinsichtlich | Alginat (Fa. Protan) | CMSEC (Erfindung) | CMC (Vergl.-Bsp.) |
| 1. Konservierung (Formaldehyd) | unbedingt erforderlich | nicht notwendig | nicht notwendig |
| 2. Scherstabilität | gut | gut | gut |
| 3. Egalität beim Druck | gut | gut | gut |
| 4. Standschärfe beim Druck | gut | sehr gut | sehr gut |
| 5. Griff des bedruckten Substrates (Auswaschbarkeit) | sehr gut | hervorragend | schlecht |
| 6. Penetration des Substrates | gut | gut | gut |
| 7. Nuance | gut | gut | gut |
| 8. Reproduzierbarkeit | schlecht | gut | gut |

**Patentansprüche**

1. Carboxymethylsulfoethylcellulose (CMSEC) mit einem Gesamtsubstitutionsgrad von mehr als 1,6 aber weniger als 2,2 und einem Substitutionsgrad durch Sulfoethylgruppen von weniger als 0,4.

2. Carboxymethylsulfoethylcellulose nach Anspruch 1, dadurch gekennzeichnet, daß das gereinigte Produkt eine Viskosität von 10 bis 50 000 mPa.s (gemessen an einer 2 gew.-%igen wäßrigen Lösung bei einem Schergefälle von $D = 2,5\ s^{-1}$ bei 20°C [Rotationsviskosimeter]) und Transmissionswerte von mehr als 95 % (gemessen an einer 2 gew.-%igen wäßrigen Lösung in einer Küvette mit einer optischen Weglänge von 10 mm mit Licht der Wellenlänge $\lambda = 550$ nm) und einen wasserlöslichen Anteil von ≥98% besitzt.

3. Verfahren zur Herstellung von Carboxymethylsulfoethylcellulose gemäß Anspruch 1 oder 2, dadurch gekennzeichnet, daß Alkalicellulose mit sulfoethyl- und carboxymethylgruppenübertragenden Reagenzien in einem Slurryverfahren umgesetzt wird, wobei die Veretherungsreagenzien zusammen oder nacheinander zur Reaktion gebracht werden, wobei das sulfoethylgruppenübertragende Reagenz vor der Zugabe des Alkali in das Slurrymedium eingegeben wird.

4. Verfahren gemäß Anspruch 3, dadurch gekennzeichnet, daß in einem zweiten Reaktionsschritt die Menge des Slurrymediums gegebenenfalls reduziert wird und die Gesamtsubstitutionsgrade der im ersten Reaktionsschritt hergestellten Carboxymethyl-, Sulfoethyl- oder Carboxymethyl-Sulfoethylcellulose ohne zwischengeschaltete Reinigungsstufe durch Zugabe weiterer Veretherungsreagenzien gemäß Anspruch 1 eingestellt werden.

5. Verwendung von Carboxymethylsulfoethylcellulose nach Anspruch 1 oder 2 als Verdickungsmittel im Reaktivtextildruck.

6. Verwendung nach Anspruch 5 im Reaktivtextildruck im Gemisch mit Natriumalginat, Stärken, modifizierten Stärken, Guar, Johannisbrotkernmehl, Gummi arabicum, Kristallgummi, Traganth-Gummi, Tamarinde und/oder Celluloseethern.

**7.** Verwendung nach Anspruch 5 oder 6, dadurch gekennzeichnet, daß als Textilmaterialien synthetische Fasern, Naturfasern, Mischgewebe oder Celluloseregenerat verwendet werden.

**8.** Verwendung nach Anspruch 5 bis 7, dadurch gekennzeichnet, daß als Farbstoffe Reaktivfarbstoffe verwendet werden.

**Claims**

**1.** Carboxymethyl sulfoethyl cellulose (CMSEC) having a total degree of substitution of more than 1.6 but less than 2.2 and a degree of substitution by sulfoethyl groups of less than 0.4.

**2.** Carboxymethyl sulfoethyl cellulose as claimed in claim 1, characterised in that the purified product has a viscosity of 10 to 50,000 mPa.s (as measured on a 2% by weight aqueous solution at a shear rate D of 2.5 s$^{-1}$ at 20°C [rotational viscosimeter]) and transmission values of more than 95% (as measured on a 2% by weight aqueous solution in a cuvette with an optical path length of 10 mm using light having a wavelength of 550 nm) and a solubility in water of ≥98%.

**3.** A process for the production of the carboxymethyl sulfoethyl cellulose claimed in claim 1 or 2, characterized in that alkali cellulose is reacted with reagents transferring sulfoethyl groups and carboxymethyl groups by a slurry method, wherein the etherification reagents are reacted together or one after the other, the reagent transferring sulfoethyl groups being introduced into the slurry medium before the alkali.

**4.** A process as claimed in claim 3, characterized in that the quantity of slurry medium is optionally reduced in a second step and the total degree of substitution of the carboxymethyl, sulfoethyl or carboxymethyl sulfoethyl cellulose prepared in the first reaction step is adjusted according to claim 1 without purification by addition of more etherification reagents.

**5.** The use of the carboxymethyl sulfoethyl cellulose claimed in claim 1 or 2 as a thickener in reactive textile printing.

**6.** The use claimed in claim 5 in reactive textile printing in admixture with sodium alginate, starches, modified starches, guar, carob bean flour, gum arabic, starch gum, tragacanth gum, tamarind and/or cellulose ethers.

**7.** The use claimed in claim 5 or 6, characterized in that synthetic fibers, natural fibers, blended fabrics or regenerated cellulose are used as the textile materials.

**8.** The use claimed in claims 5 to 7, characterized in that the dyes used are reactive dyes.

**Revendications**

**1.** Carboxyméthylsulfoéthylcellulose (CMSEC) à un degré de subsitution global supérieur à 1,6 mais inférieur à 2,2 et à un degré de substitution par les groupes sulfoéthyle inférieur à 0,4.

**2.** Carboxyméthylsulfoéthylcellulose selon la revendication 1, caractérisée en ce que le produit purifié a une viscosité de 10 à 50 000 mPa.s (mesure sur une solution aqueuse à 2 % en poids sous un cisaillement de D = 2,5 s$^{-1}$ à 20°C au viscosimètre rotatif) et des valeurs de transmission supérieures à 95 % (mesure sur une solution aqueuse à 2% en poids dans une cuvette à trajet optique de 10 mm avec de la lumière de longueur d'onde λ = 550 nm) et une fraction soluble dans l'eau supérieure ou égale à 98 %.

**3.** Procédé de préparation de la carboxyméthylsulfoéthylcellulose selon la revendication 1 ou 2, caractérisé en ce que l'on traite l'alcalicellulose par des réactifs apportant des groupes sulfoéthyle et des groupes carboxyméthyle dans une opération sur bouillie, les réactifs éthérifiants étant mis en oeuvre ensemble ou successivement, le réactif apportant les groupes sulfoéthyle étant introduit dans le milieu à l'état de bouillie avant l'alcali.

4. Procédé selon la revendication 3, caractérisé en ce que, dans un deuxième stade de réaction, on diminue le cas échéant la quantité du milieu de la bouillie et on règle les degrés de substitution globaux des carboxyméthyl-, sulfoéthyl- ou carboxyméthylsulfoéthyl-celluloses préparées au premier stade de réaction, sans opération intermédiaire de purification, par addition d'autres réactifs éthérifiants selon la revendication 1.

5. Utilisation des carboxyméthylsulfoéthylcelluloses selon la revendication 1 ou 2 en tant qu'agents épaississants dans l'impression textile par colorants réactifs.

6. Utilisation selon la revendication 5 dans l'impression textile par colorants réactifs en mélange avec de l'alginate de sodium, de l'amidon, un amidon modifié, de la gomme guar, de la gomme de caroube, de la gomme arabique, de la gomme cristal, de la gomme adragante, du tamarin et/ou des éthers cellulosiques.

7. Utilisation selon la revendication 5 ou 6, caractérisée en ce que la matière textile consiste en fibres synthétiques, en fibres naturelles, en tissus mélangés ou en cellulose régénérée.

8. tilisation selon les revendications 5 à 7, caractérisée en ce que les colorants utilisés sont des colorants réactifs.